# EUROPEAN PATENT APPLICATION

(11) **EP 1 498 643 A2**
(43) Date of publication of application: **19.01.2005**
(21) Application number: 04014568.2
(22) Date of filing: 22.06.2004
(51) Int. Cl.: F16H 61/00

(54) **Hydraulic transmission control system and method for vehicle having automatic engine stop/restart function**

(30) Priority: 15.07.2003 JP 2003196919
(71) Applicant: NISSAN MOTOR COMPANY, LIMITED, Yokohama-shi, Kanagawa 221-0023 (JP); JATCO Ltd, Fuji-shi, Shizuoka 417-8585 (JP)
(72) Inventor: Sakakibara, Satoshi, Yamato-shi Kanagawa 242-0014 (JP); Nakashima, Kenji, Fuji-shi Shizuoka 417-8585 (JP)
(74) Representative: Weber, Joachim, Dr.

(57) **Abstract**

There is provided a hydraulic transmission control system for a vehicle having an automatic engine stop/restart function. The hydraulic transmission control system includes a transmission having a power transmission element, an oil pump driven in synchronism with the engine to generate an oil pressure, a pressure regulator valve that regulates the oil pressure and supplies the regulated oil pressure to the power transmission element so as to allow power transmission through the power transmission element, and a control unit that operates the pressure regulator valve to control the oil pressure supplied to the power transmission element to a higher value when the vehicle is shifted from an automatic engine stop state to an automatic engine restart state, than that when the vehicle is in a normal driving state.

## Description

### BACKGROUND OF THE INVENTION

The present invention relates to a hydraulic transmission control system and method for a vehicle having an automatic engine stop/restart function.

A vehicle having an automatic engine stop/restart function (called "idle-stop control function") is known for improved fuel efficiency and low exhaust emission. By virtue of the automatic engine stop/restart function, the vehicle allows a vehicle engine to stop automatically upon satisfaction of a certain condition when the vehicle makes a stop to e.g. wait at a traffic light or railroad crossing with a vehicle transmission placed in a drive range, and then, allows the engine to restart automatically when the vehicle starts traveling again. During the automatic engine stop, the supply of hydraulic oil from an oil pump to the transmission ceases to cause a decrease in transmission oil pressure. As a result, the slippage of a power transmission element occurs on acceleration due to the insufficiency of transmission oil pressure at the automatic engine restart.

In order to solve such a problem, Japanese Laid-Open Patent Publication No. 2000-35121 proposes an automatic engine restart control device capable of quickly raising a transmission line pressure upon the automatic engine restart without an additional oil pump to supply hydraulic oil during the automatic engine stop.

### SUMMARY OF THE INVENTION

The above-proposed engine restart control device includes a pressure-regulating valve having a spool to regulate the transmission line pressure. The valve spool is biased to a pressure increasing side upon the automatic engine restart, but is overstroked to cause an overshoot in the line pressure. The valve spool is then urged to a pressure reducing side. There however arises a sudden large drop in the line pressure, resulting in the slippage of the power transmission element.

It is therefore an object of the present invention to provide a hydraulic transmission control system and method for a vehicle having an automatic engine stop/restart function, capable of preventing a power transmission element from slipping on acceleration even when there arises a drop in hydraulic pressure from a pressure regulator valve at the time of automatic engine restart.

According to a first aspect of the invention, there is provided a hydraulic transmission control system for a vehicle having an automatic engine stop/restart function, comprising: a transmission having a power transmission element; an oil pump driven in synchronism with the engine to generate an oil pressure; a pressure regulator valve that regulates the oil pressure and supplies the regulated oil pressure to the power transmission element so as to allow power transmission through the power transmission element; and a control unit that operates the pressure regulator valve to control the oil pressure supplied to the power transmission element to a higher value when the vehicle is shifted from an automatic engine stop state to an automatic engine restart state, than that when the vehicle is in a normal driving state.

According to a second aspect of the invention, there is provided a hydraulic transmission control method for a vehicle having an automatic engine stop/restart function, comprising: supplying a hydraulic pressure to a transmission mechanism so as to allow power transmission through the transmission mechanism; setting a target pressure to a first target value when the vehicle is in a normal driving state and to a second target value higher than the first target value when the vehicle is shifted from an automatic engine stop state to an automatic engine restart state; and controlling the hydraulic pressure to the target pressure.

The other objects and features of the invention will also become understood from the following description.

### BRIEF DESCRIPTION OF THE DRAWINGS

FIG. 1 is a schematic diagram of a vehicle with a hydraulic transmission control system according to one exemplary embodiment of the present invention.

FIG. 2 is a schematic diagram of a hydraulic circuit of the transmission control system according to one exemplary embodiment of the present invention.

FIG. 3 is a flowchart for hydraulic pressure control according to one exemplary embodiment of the present invention.

FIG. 4 is a time chart of hydraulic pressure control according to one exemplary embodiment of the present invention.

### DESCRIPTION OF THE EMBODIMENTS

The present invention will be described below with reference to the drawings.

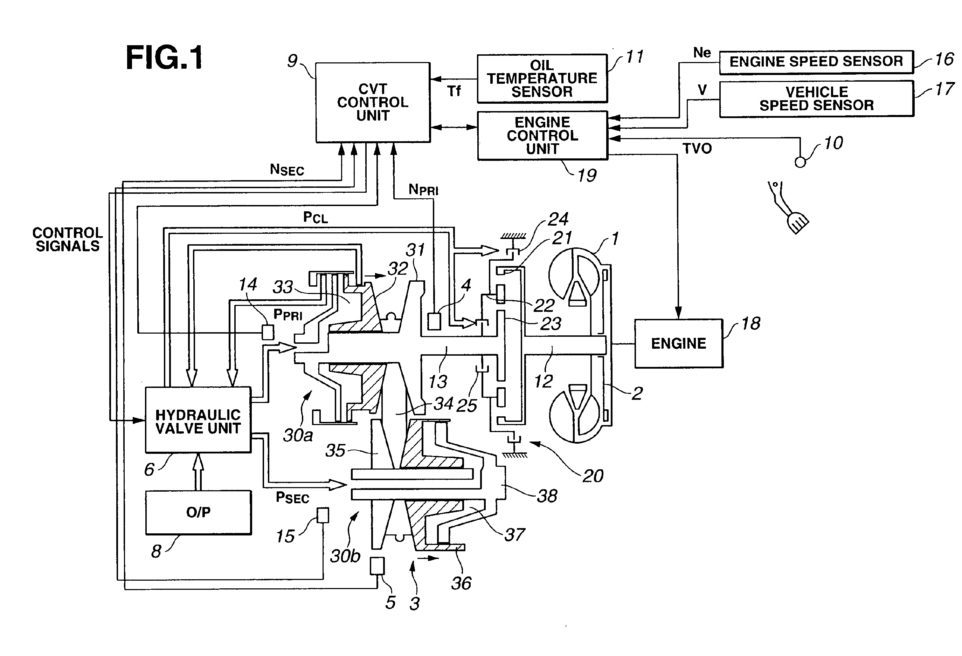

As shown in FIG. 1, there is provided a vehicle including engine 18, engine control unit (ECU) 19 and a hydraulic transmission control system according to one exemplary embodiment of the present invention. Herein, the vehicle has an automatic engine stop/restart function (called "idle-stop control function") to stop engine 18 automatically when the vehicle make a stop with the transmission placed in a drive range (in which power transmission is possible) and restart engine 18 automatically when the vehicle starts traveling again. The automatic stop/restart operations of engine 18 are controlled by ECU 19.

The hydraulic transmission control system includes a transmission with torque converter 1, forward/reverse changeover mechanism 20 and belt-type continuously variable transmission (CVT) mechanism 3, hydraulic valve unit 6, oil pump 8 and CVT control unit 9.

Torque converter 1 is connected to an output shaft of engine 18, and includes lock-up clutch 2 for directly connecting engine 18 to CVT mechanism 3.

Forward/reverse changeover mechanism 20 is arranged between torque converter 1 and CVT mechanism 3, and includes a planetary gear unit including ring gear 21 connected to turbine shaft 12 of torque converter 1, pinion carrier 22, and sun gear 23 connected to input shaft 13 of CVT mechanism 3, reverse clutch 24 for holding pinion carrier 22 to a transmission case and forward clutch 25 for coupling pinion carrier 22 to CVT input shaft 13.

CVT mechanism 3 has primary pulley 30a connected to CVT input shaft 13, secondary pulley 30b disposed on driven shaft (i.e. CVT output shaft) 38 and belt 34 (as a power transmission element) drivingly connecting primary pulley 30a to secondary pulley 30b.

Primary pulley 30a includes fixed conical pulley disc 31 rotated together with CVT input shaft 13, movable conical pulley disc 32 opposed to pulley disc 31 to define a V-shaped pulley groove between pulley discs 31 and 32, and a cylinder chamber 33. Pulley disc 32 is moved in the axial direction of CVT input shaft 13 according to oil pressure supplied to cylinder chamber 33 (hereinafter referred to as "primary-pulley hydraulic pressure P_{PRI}"), thereby adjusting the width of the primary pulley groove and changing the radius of belt 34 coming into contact with the primary pulley 30a.

Secondary pulley 30b has fixed conical pulley disc 35 rotated together with driven shaft 38, movable conical pulley disc 36 opposed to the pulley disc 11b to define a V-shaped pulley groove between pulley discs 35 and 36, and a cylinder chamber 37. Pulley disc 36 is moved in the axial direction of driven shaft 38 according oil pressure supplied to cylinder chamber 37 (hereinafter referred to as "secondary-pulley hydraulic pressure P_{SEC}"), thereby adjusting the width of the secondary pulley groove and changing the radius of belt 12 coming into contact with secondary pulley 30b.

With such an arrangement, a driving torque is inputted from engine 18 to CVT mechanism 3 through torque converter 1 and forward/reverse changeover mechanism 20, transmitted from primary pulley 30a to secondary pulley 30b via belt 34, and then, outputted to driving wheels (not shown) through a driving gear, an idler gear, a final reduction gear and a differential gear (not shown). The rotation speed ratio between primary pulley 30a and secondary pulley 30b, i.e., the power transmission ratio of CVT mechanism 3 is varied continuously by moving pulley discs 32 and 36 and thereby changing the radii of belt 34 coming into contact with pulleys 30a and 30b, respectively. In other words, the power transmission ratio of CVT mechanism 3 is controlled by adjusting primary- and secondary-pulley hydraulic pressures P_{PRI} and P_{SEC} under the control of CVT control unit 9.

The hydraulic transmission control system further includes throttle opening sensor 10 to detect throttle opening TVO, oil temperature sensor 11 to detect transmission oil temperature Tf, primary pulley rotation speed sensor 4 to detect a rotation speed of primary pulley 30a (hereinafter referred to as "primary-pulley rotation speed N_{PRI}"), secondary pulley rotation speed sensor 5 to detect a rotation speed of secondary pulley 30b (hereinafter referred to as "secondary-pulley rotation speed N_{SEC}"), primary-pulley hydraulic pressure sensor 14 to detect primary-pulley hydraulic pressure P_{PRI}, secondary-pulley hydraulic pressure 15 to detect secondary-pulley hydraulic pressure P_{SEC}, engine speed sensor 16 to detect engine rotation speed Ne and vehicle speed sensor 17 to detect vehicle traveling speed V. Oil temperature sensor 11, primary and secondary pulley rotation speed sensor 4 and 5 and primary- and secondary-pulley hydraulic pressure sensors 14 and 15 are connected with CVT control unit 9, so that CVT control unit 9 reads detection signals, indicative of transmission oil temperature Tf, primary- and secondary-pulley rotation speeds N_{PRI} and N_{SEC} and primary- and secondary-pulley hydraulic pressures P_{PRI} and P_{SEC}, from oil temperature sensor 11, primary and secondary pulley rotation speed sensor 4 and 5 and primary- and secondary-pulley hydraulic pressure sensors 14 and 15. Throttle opening sensor 10, engine speed sensor 16 and vehicle speed sensor 17 are connected to ECU 19 such that ECU 19 reads detection signals, indicative of throttle opening TVO, engine speed Ne and vehicle speed V, from throttle opening 10, engine speed sensor 16 and vehicle speed sensor 17. These control parameter signals are transmitted between CVT control unit 9 and ECU 19 via a controller area network (CAN). Further, ECU 19 sends to CVT control unit 9 an idle stop signal informing that engine 18 is in an automatic stop (idle-stop) state or an automatic engine restart signal informing that engine 18 is shifted into an automatic restart state e.g. upon a driver's brake release operation via CAN. CVT control unit 9 processes the control parameter signals and idle stop or automatic engine restart signal and outputs control signals to execute various commands so as to control the operations of CVT mechanism 3 and hydraulic valve unit 6.

Oil pump 8 is driven in synchronism with engine 18 to supply hydraulic oil to hydraulic valve unit 6.

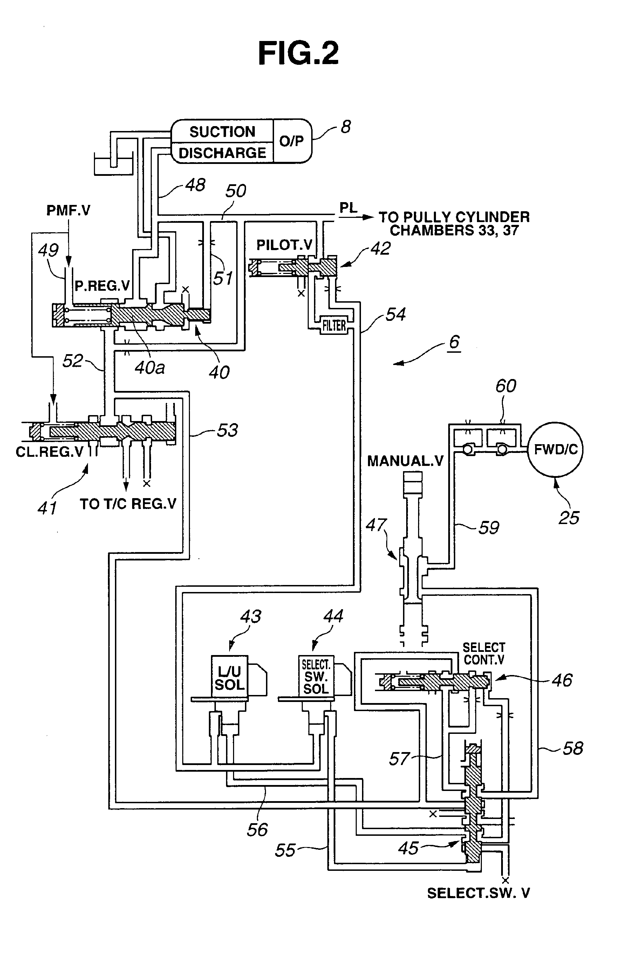

Hydraulic valve unit 6 receives oil pressure discharged from oil pump 8 and supplies clutch engagement pressure P_{CL} for forward clutch 25 or reverse clutch 24, primary-pulley hydraulic pressure P_{PRI} for primary pulley cylinder chamber 33 and secondary-pulley hydraulic pressure P_{SEC} for secondary pulley cylinder chamber 37 according to the control signals from CVT control unit 9 so as to allow power transmission from engine 18 to the driving wheels via the transmission. As shown in FIG. 2, hydraulic valve unit 6 includes pressure regulator valve 40, clutch regulator valve 41, pilot valve 42, lock-up solenoid 43, selector switching solenoid 44, selector switching valve 45, selector control valve 46, manual valve 47, oil passages 48 to 59, orifice 60 and a pressure modifier (P.MF.V).

Pressure regulator valve 40 has a line pressure port connected to an oil discharge port of oil pump 40 through oil passage 48 so that pressure regulator valve 40 receives the discharge pressure from oil pump 8. When the pressure modifier operates under the control of CVT control unit 9 to adjust pilot pressure to a modifier pressure, the modifier pressure is supplied to one end face of spool 40a of pressure regulator valve 40 through oil passage 49. Further, a feedback pressure is supplied to the other end face of spool 40a of pressure regulator valve 40 through oil passage 51 (branched from oil passage 50). Upon receipt of the modifier pressure and the feedback pressure as control signals, pressure regulator valve 40 becomes operated to regulate the discharge pressure to line pressure PL (as belt clamp pressure) in such a manner that line pressure PL increases with the modifier pressure. Line pressure PL is supplied through oil passage 50 to secondary pulley cylinder chamber 37 via oil passage 50. Line pressure PL thus serves as secondary-pulley hydraulic pressure P_{SEC}. Line pressure PL is also supplied to another pressure regulating valve (not shown) so as to adjust line pressure PL to primary-pulley hydraulic pressure P_{PRI}·

Clutch regulator valve 41 receives a relief pressure from pressure regulator valve 40 through oil passage 52 and adjusts the relief pressure to clutch pressure P_{CL}. Clutch pressure P_{CL} is supplied to selector switching valve 45 and selector control valve 46 through oil passage 53.

Pilot valve 42 receives line pressure PL and adjusts line pressure PL to pilot pressure PPI. Pilot pressure PPI is supplied to lock-up solenoid 43 and selector switching solenoid 44 through oil passage 54.

Selector switching solenoid 44 is set to the ON position at the automatic restart of engine 18 to supply pilot pressure PPI to one end face of a spool (not shown) of selector switching valve 45.

Lock-up solenoid 43 performs duty cycle control to regulate pilot pressure PPI to a signal pressure to create a so-called shelf pressure for forward clutch 25 and then supply the signal pressure to selector switching valve 45 through oil passage 56.

Selector switching valve 45 is actuated, upon receipt of pilot pressure PPI from selector switching solenoid 44 at the automatic restart of engine 18, to control the supply of clutch pressure P_{CL} to forward clutch 25. Selector control valve 46 receives clutch pressure P_{CL} and adjusts clutch pressure P_{CL} to the shelf pressure for forward clutch 25 in response to the signal pressure from lock-up solenoid 43. Then, clutch pressure P_{CL} is supplied to manual valve 47 through oil passages 57 and 58.

Manual valve 47 receives clutch pressure P_{CL} from control valve 46 through oil passage 58 and supplies clutch pressure P_{CL} to forward clutch 25 through oil passage 59, and then, orifice 60 at the automatic restart of engine 18.

In the present embodiment, the hydraulic transmission control system is configured to perform, at the automatic restart of engine 18, line pressure control to secure the minimum line pressure PL required to prevent the slippage of belt 34 and shock caused by a surge pressure due to the engagement of forward clutch 25, with respect to the torque input to CVT mechanism 3 in accordance with a driver's acceleration operation (calculated by multiplying an engine torque by a stall torque ratio) in addition to clutch pressure control to delay a rise of clutch pressure P_{CL} with respect to a rise of pulley clamp pressure through the application of clutch pressure P_{CL} to forward clutch 25 via orifice 60. More specifically, CVT control unit 9 determines a target line pressure and causes pressure regulator valve 40 to control actual line pressure PL to the target line pressure. The target line pressure is set at a first target value when engine 18 is in a normal driving state and is set at a second target value at the time when engine 18 restarts from the automatic engine stop (idle stop) state. The second target line pressure value for the automatic engine restart is set higher than the first target line pressure value for the normal driving, so as to keep line pressure PL higher than or equal to the first target value in the event that line pressure PL suddenly drops, after overshooting the second target value, under the pressure regulating operation of pressure regulator valve 40.

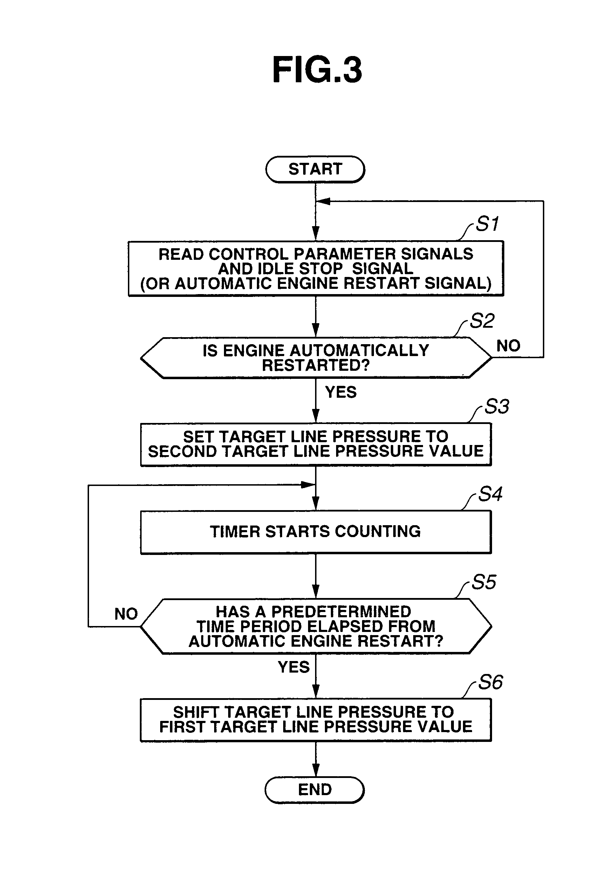

As shown in FIG. 3, the line pressure control is performed in the following steps at the automatic restart of engine 18.

In step S1, CVT control unit 9 reads the control parameter signals and idle stop signal or automatic engine restart signal.

In step S2, CVT control unit 9 judges whether engine 18 is automatically restarted. The judgment on whether engine 18 is automatically restarted or not is made upon switching from the idle stop signal to the automatic engine restart signal. If Yes in step S2, the control goes to step S3. If No in step S2, the control goes back to step S 1.

In step S3, CVT control unit 9 sets the target line pressure to the second target value and outputs a command to cause pressure regulator valve 40 to control actual line pressure PL to the target line pressure.

In step S4, CVT control unit 9 actuates a timer to measure a lapse of time from the automatic restart of engine 18.

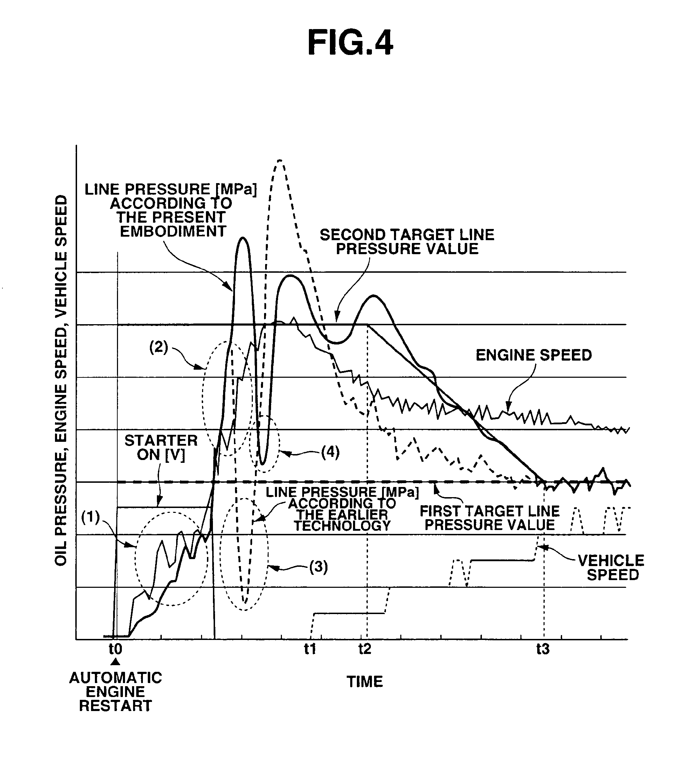

In step S5, CVT control unit 9 determines whether a predetermined time period has elapsed from the automatic restart of engine 18. If Yes in step S5, the control goes to step S6. If No in step S5, the control goes back to step S4. The predetermine time period is a time required for the vehicle to reach a vehicle start-off region (see FIG. 4) after the automatic restart of engine 18.

In step S6, CVT control unit 9 gradually decrease the target line pressure to the first target value and outputs a command to cause pressure regulator valve 40 to control actual line pressure PL to the target line pressure.

The line pressure control is effected as shown in FIG.4.

During the automatic stop of engine 18, oil pump 8 is stopped without providing an oil supply to CVT mechanism 3. Oil pump 8 is actuated at the automatic restart of engine 18 and driven in synchronism with engine 18 to supply hydraulic oil to CVT mechanism 3 via hydraulic valve unit 6.

Engine 18 rotates at a low speed during cranking (before initial combustion), as indicated in an encircled portion (1) of FIG. 4, so that the supply of hydraulic oil from oil pump 8 is still insufficient. Thus, pressure regulator valve 40 does not receive oil flow and pressure to be regulated and keeps its oil discharge port closed.

Upon the initial combustion, the rotation speed of engine 18 becomes increased. Herein, it is desirable to increase engine speeed Ne as quickly as possible in order to secure good startability. As the rotation speed of oil pump 8 increases with engine speed Ne, the supply of hydraulic oil from oil pump 8 becomes sharply increased. Pressure regulator valve 40 receives sufficient oil flow and pressure and urges valve spool 40a to a pressure increasing side. Valve spool 40a is however overstroked to cause an overshoot in line pressure PL as indicated in an encircled portion (2) of FIG. 4. Then, pressure regulator valve 40 urges spool 40a to a pressure reducing side. As a result, there arises a sudden large drop in line pressure PL.

At this time, line pressure PL suddenly drops to become lower than the first target value necessary to prevent the slippage of belt 34, as indicated in an encircled portion (3) of FIG. 4, if the target line pressure is set to the first target value at the automatic restart of engine 18 according to the earlier technology.

On the other hand, the target line pressure is set to the second target value during the predetermine time period between automatic engine restart time t0 and time t2 (at which the vehicle reaches the vehicle start-off region) shortly after vehicle start-off time t1 in the present embodiment. The predetermined time period is set using the timer so as to cover the initial pressure regulating operation of pressure regulator valve 40 where there arise relatively large changes in line pressure PL at the automatic restart of engine 18. Alternatively, the target line pressure may be set to the second target line pressure value until the vehicle reaches a predetermined traveling speed V. In this case, the predetermined vehicle traveling speed is set to a value at which the vehicle reaches the vehicle start-off region. Line pressure PL is therefore kept higher than or equal to the first target line pressure value at the automatic restart of engine 18, as indicated in an encircle portion (4) of FIG. 4, when pressure regulator valve 40 operates to eliminate an line pressure overshoot but cause a sudden drop in line pressure PL. This makes it possible to prevent the slippage of belt 34 assuredly at the automatic restart of engine 18.

For the gradual control of line pressure PL, the target line pressure is gradually decreased from the second target value to the first target value in a period from time t2 to time t3, and then, set to the first target line pressure value from time t3 onward in the present embodiment. This makes it possible to avoid shock caused by a sudden change in line pressure PL.

As described above, it is possible for the hydraulic transmission control system of the present embodiment to prevent the slippage of the power transmission element (i.e., belt 34) by controlling hydraulic pressure supplied from the hydraulic control unit to the transmission to a higher value in the automatic engine restart state than in the normal driving state, even when there arises sudden drop in the hydraulic pressure at the automatic restart of engine 18.

The entire contents of Japanese Patent Application No. 2003-196919 (filed on July 15, 2003) are herein incorporated by reference.

Although the present invention has been described with reference to a specific embodiment of the invention, the invention is not limited to the above-described embodiment. Various modification and variation of the embodiment described above will occur to those skilled in the art in light of the above teaching. For example, a toroidal continuously variable transmission mechanism or stepwise transmission mechanism may be used in place of CVT mechanism 3. Further, hydraulic valve unit 6 may be configured such that the pressure regulated by pressure regulator valve 40 is supplied to any clutch to be engaged upon the automatic restart of engine 18. In this case, the clutch to receive a hydraulic pressure regulated by pressure regulator valve 40 (such as a start clutch or forward clutch 25) serves as the power transmission element. The scope of the invention is defined with reference to the following claims.

## Claims

1. A hydraulic transmission control system for a vehicle having an automatic engine stop/restart function, comprising:
a transmission having a power transmission element (34);
an oil pump (8) driven in synchronism with an engine (18) to generate an oil pressure;
a pressure regulator valve (40) that regulates the oil pressure and supplies the regulated oil pressure to the power transmission element (34) so as to allow power transmission through the power transmission element (34); and
a control unit (9) that operates the pressure regulator valve (40) to control the oil pressure supplied to the power transmission element (34) to a higher value when the vehicle is shifted from an automatic engine stop state to an automatic engine restart state, than that when the vehicle is in a normal driving state.

2. A hydraulic transmission control system according to Claim 1, wherein the transmission includes a continuously variable transmission mechanism (3) having a primary pulley (30a), a secondary pulley (30b) and a belt (34) drivingly connecting the primary pulley (30a) to the secondary pulley (30b) and serving as the power transmission element.

3. A hydraulic transmission control system according to Claim 1 or 2,
the pressure regulator valve (40) regulating the oil pressure generated by the oil pump to a transmission line pressure (PL) and applying the transmission line pressure (PL) to the power transmission element (34),
the control unit (9) being configured to: set a target line pressure to a first target line pressure under the normal driving state and to a second target line pressure value under the automatic engine restart state; and operate the pressure regulator valve (40) to control the transmission line pressure (PL) to the target line pressure, and
the second target line pressure value being higher than the first target line pressure so as to keep the actual transmission line pressure (PL) higher than or equal to the first target line pressure when the pressure regulator valve (40) becomes operated upon automatic engine restart so as to eliminate a line pressure overshoot but cause a sudden drop in the transmission line pressure (PL).

4. A hydraulic transmission control system according to Claim 3, wherein the control unit (9) is further configured to: keep the target line pressure at the second target line pressure value until a predetermined time period has elapsed from the automatic engine restart; and then gradually decrease the target line pressure to the first target line pressure value.

5. A hydraulic transmission control system according to Claim 4, wherein the predetermined time period is a time required to reach a vehicle start-off region after the automatic engine restart.

6. A hydraulic transmission control system according to Claim 3, wherein the control unit (9) is further configured to: keep the target line pressure at the second target line pressure value until the vehicle reaches a predetermined traveling speed after the automatic engine restart; and then, gradually decrease the target line pressure to the first target line pressure value.

7. A hydraulic transmission control system according to Claim 6, wherein the predetermined vehicle traveling speed is a value at which the vehicle reaches a start-off region after the automatic engine restart.

8. A hydraulic transmission control method for a vehicle having an automatic engine stop/restart function, comprising:
supplying a hydraulic pressure (PL) to a transmission mechanism (3) so as to allow power transmission through the transmission mechanism (3);
setting a target pressure to a first target value when the vehicle is in a normal driving state and to a second target value higher than the first target value when the vehicle is shifted from an automatic engine stop state to an automatic engine restart state; and
controlling the hydraulic pressure (PL) to the target pressure.

9. A hydraulic transmission control method according to Claim 8, wherein the transmission mechanism is a continuously variable transmission (3) that has a primary pulley (30a), a secondary pulley (30b) and a belt (34) drivingly connecting the primary pulley (30a) to the secondary pulley (30b).

10. A hydraulic transmission control method according to Claim 8 or 9, further comprising:
keeping the target pressure at the second target value until reaching a vehicle start-off region after automatic engine restart; and
gradually decreasing the target pressure to the first target value after reaching the vehicle start-off region.
